(19) Europäisches Patentamt / European Patent Office / Office européen des brevets

(11) **EP 4 091 797 B1**

(12) **EUROPEAN PATENT SPECIFICATION**

(45) Date of publication and mention
of the grant of the patent:
**24.07.2024  Bulletin 2024/30**

(21) Application number: **22172490.9**

(22) Date of filing: **10.05.2022**

(51) International Patent Classification (IPC):
**B29C 64/112** (2017.01)    **B29C 64/165** (2017.01)
**B22F 10/14** (2021.01)    **B22F 10/80** (2021.01)
**B29C 64/182** (2017.01)    **B29C 64/386** (2017.01)
**B33Y 10/00** (2015.01)    **B33Y 50/00** (2015.01)
**B22F 10/10** (2021.01)

(52) Cooperative Patent Classification (CPC):
**B29C 64/386; B22F 10/10; B22F 10/80;
B29C 64/112; B29C 64/165; B29C 64/182;
B33Y 10/00; B33Y 50/00;** B22F 10/14

(54) **METHOD OF GENERATING PRINTHEAD ACTUATION DATA FOR PRINTING A 3-D OBJECT**

VERFAHREN ZUM ERZEUGEN VON DRUCKKOPFBETÄTIGUNGSDATEN ZUM DRUCKEN EINES 3-D-OBJEKTES

PROCÉDÉ DE GÉNÉRATION DE DONNÉES D'ACTIONNEMENT DE TÊTE D'IMPRESSION POUR L'IMPRESSION D'UN OBJET 3D

(84) Designated Contracting States:
**AL AT BE BG CH CY CZ DE DK EE ES FI FR GR HR HU IE IS IT LI LT LU LV MC MK MT NL NO PL PT RO RS SE SI SK SM TR**

(30) Priority: **11.05.2021  GB 202106694**

(43) Date of publication of application:
**23.11.2022  Bulletin 2022/47**

(73) Proprietor: **Meteor Inkjet Ltd
Cambridge CB22 7GG (GB)**

(72) Inventors:
• **HILLIER, Ken
Cambridge, CB22 7GG (GB)**
• **WISEMAN, Aidan Scott
Cambridge, CB22 7GG (GB)**

(74) Representative: **Slingsby Partners LLP
1 Kingsway
London WC2B 6AN (GB)**

(56) References cited:
**WO-A1-2015/106840    WO-A1-2017/210254**

**Description**

**FIELD OF THE INVENTION**

This invention relates to a method and system, typically for use with inkjet printers, which can generate printhead actuation data from the 3D CAD image of the item that will be printed.

**BACKGROUND**

Inkjet printheads can use a piezoelectric actuator to eject ink from a nozzle that is applied to a printing medium. Having been widely adopted in 2D printing, these types of printheads are now being used in 3D printing to build up a height (z-axis) by printing multiple layers of images on top of each other.

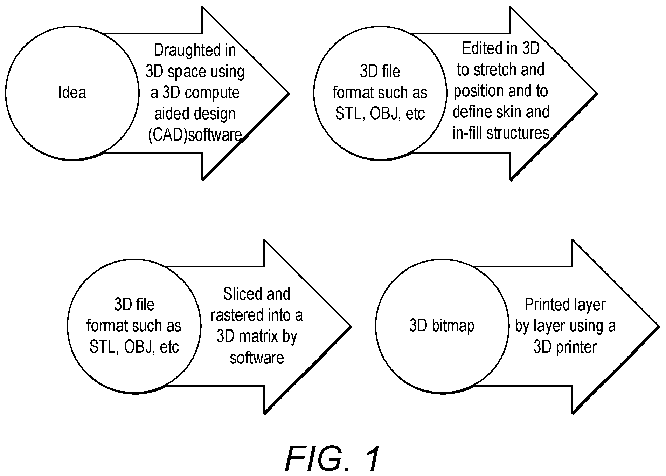

Figure 1 shows a schematic illustration of an example of a 3D inkjet printer indicating the flow of image data and the software packages used, described by their function. These software packages have been developed by 3D printer manufacturers and are dedicated to specific manufacturers and their specific physics. Often slow or under-developed, they lack the speed and power of the mature technologies, such as raster image processors (RIPs), used in the 2D graphics industry.

It is desirable to develop an alternative workflow that can use existing 2D graphics technologies such as colour RIPping engines, to accelerate the power of the solutions.

**SUMMARY OF THE INVENTION**

WO2017/210254 and WO2015/106840 disclose a method of generating printhead actuation data for printing a 3-D object, the method comprising the steps of: slicing, for a given 3-D object having 3-D object data corresponding thereto, the 3-D object data into a series of layers; and generating a 2-D vector graphics image associated with each layer, wherein the colour and/or the density of colour within the 2-D vector graphics image at a given point is used to determine at least one property of the material to be ejected, during printing, at that given point in the image.

According to the present invention, such a method further comprises the steps of saving the 2-D vector graphics images as a 2-D vector graphics file and analysing metadata associated with a plurality of 2-D vector graphics files when determining how to nest or stack the objects to be printed within a print box.

Thus, the present invention allows a 3-D object to be converted into a series of image files which can more easily be manipulated, processed and in general handled by existing software in a manner that is faster and more flexible than is typically provided by 3-D image processing software.

The colour and/or the colour density may be defined by a colour code such as Pantone, sRGB, a specified spot colour or a brand colour. The colour and/or the density of colour determines the pattern of material to be ejected within a given region.

The property of the material to be ejected may include one or more of: the volume of material to be ejected, the depth of material to be ejected, the pattern in which the material is to be ejected, the printing material itself, the mass density of a binder fluid within the material to be ejected.

The method may further comprise the step of obtaining the 3-D object data corresponding to the 3-D object.

The method may further comprise the step of storing, within metadata associated with the 2-D vector graphics file, information that relates to the layer thickness.

The method may further comprise the step of storing, within metadata associated with the 2-D vector graphics file, information that relates to the total height of the 3-D object.

The pattern may be a 2-D tile pattern. Multiple adjacent 2-D tile patterns may produce a contiguous pattern. The pattern may include at least one repeated pattern. The 2-D tile pattern may have at least one pair of opposing edges which match to permit a contiguous pattern to be formed when adjacent tiles are aligned. The pattern of material may be a honeycomb having regions of deposited material and void regions in which no material is deposited.

The method may further comprise the step of manipulating one or more of the 2-D graphics images to alter the form of the final 3-D object to be printed. The manipulating step may include one or more of: rotation, scaling, changing the orthogonality of the image.

The at least one property of the material which is determined may be a non-colour property of the material.

The file format generated may be a page description file conforms to the Adobe PDF (RTM) standard.

The graphics file may have multiple pages such that one page corresponds to one layer of the 3D structure.

The graphics file preferably contains the 2D image information in a vector format.

In the graphics file, parts of the 3-D structure that require a greater deposition of fluid in order to have their required function may be shown as a darker greyscale colour, whereas parts of the structure that require a lower deposition of fluid in order to have their required function may be shown as a lower / mid-tone greyscale colour.

The graphics file may contain representations, such a light-tone greyscale colour, that indicate that parts of the 3-D structure require a microstructure, such as an infill and/or support structure that is not detailed in the original 3D structure.

The graphics file may contain representations of parts of the structure that require a different fluid to be used - these could be shown in a different colour, i.e. red, blue, green etc.

The invention includes a system comprising a processor configured to carry out the method of any of claims 1-9.

The system may further comprise a screening engine. The screening engine may be configured to convert the 2-D graphics vector file into raster data for inkjet printing a layer of a 3D structure.

The screening engine may be configured to, in dependence upon the colour, tone, shading or other property of different parts of the image, alter the printing instructions to vary the printing within the different parts of the image.

The screening engine may be configured to allow further editing of the 2-D graphics vector file pages prior to RIPping so as to adjust for post-processing effects on the shape of the printed object.

The system converts 3D CAD images or indeed any other data representative of a 3-D object, together with information about the desired material characteristics, such as composition, into a 2D vector graphics file. The file is preferably a portable document format (pdf) in which those material characteristics are coded up as greyscale colours. In this way, the invention enables the information describing a complex 3D material to be converted to printhead firing data using a 2D graphics workflow such as RIPping, Screening, swath processing, and synchronized feeding to the heads.

The system may comprise: a slicing algorithm to create 2D images in a vector format of slices through a 3D object. A coding mechanism may be used that applies a different 'colour' to each material and a different 'greyscale' to each area that needs a different depth of inkjet fluid applied to it; the resulting file is a single multi-page file in a print-ready format for consumption by a RIP.

Whilst the colour and greyscale of the image may be used as described above, the colour and greyscale may be representative of other material properties such as binder density, material volume or even a pattern in which the material should be deposited.

The method and system may also include a raster image processor (RIP) which may be configured to consume the multi-page vector file (or multiple files) produced by this method. The RIP may create a micro-structure in the 3-D structure through the use of repeatable tiled screen images. These images may be designed so as to provide an infinitely expandable contiguous network of micro-structure, that is the edge of each 2D tile is designed to match to the opposing edge of the same tile, so that repeated tiles laid together produce contiguous microstructures. The tiles used may vary from one layer to another, subject to there being a small enough change that the micro-structure on each layer is contiguous to the microstructure of the layer above.

Having created graphic vector files as an intermediate stage as described in this invention, these bring many new opportunities for preparing 3D data, due to the wide availability of for example PDF handling software, such as can easily handle 2D editing and archiving, i.e. saving and storing the file for recall and later use.

Different greyscale levels/colour density may be code for how many drops of fluid are dispensed into the pixel in the raster.

The selected density of tone may be coded by the screening engine to use a screen tile that has within it a micro-structure of heavy and low deposition areas such that the heavy deposition areas are contiguous within the tile and at each edge with the mating edge of a copy of that tile.

The screen tile may be selected on the basis of which layer the raster relates to, such that the selected screen tile, although different from the screen tile used in the layer below in the same position within the image, has heavy deposition areas that will be contiguous, at least in part, with the heavy deposition areas of the tile below it in the stack. By "at least in part", we mean that adjacent layer may differ slightly such that a change in the infill form or shape may occur, but that the change is only gradual between individual layers.

Further editing of the vector file pages may be performed prior to RIPping in order to adjust for post-processing effects on the shape of the printed object.

The processing of the vector file pages may be a distortion in X and/or Y to allow for differential shrinkage.

The editing of the vector file pages may be a rotation or translation.

The editing of the vector file pages may be the nesting together of images from other pages within a single page subject to the resulting page having 2D dimensions that fit within the footprint of the printer's build volume. In this way, a single vector file page may include more than one separate image.

Metadata of the 2D vector page file is used, typically when the metadate includes height and/or thickness information, to fit additional items into the maximum build volume of a printer. The vector multi-page print description file is therefore a beneficial way to save and store a 3D print job.

## BRIEF DESCRIPTION OF THE FIGURES

The present invention will now be described by way of example with reference to the accompanying drawings.

Figure:

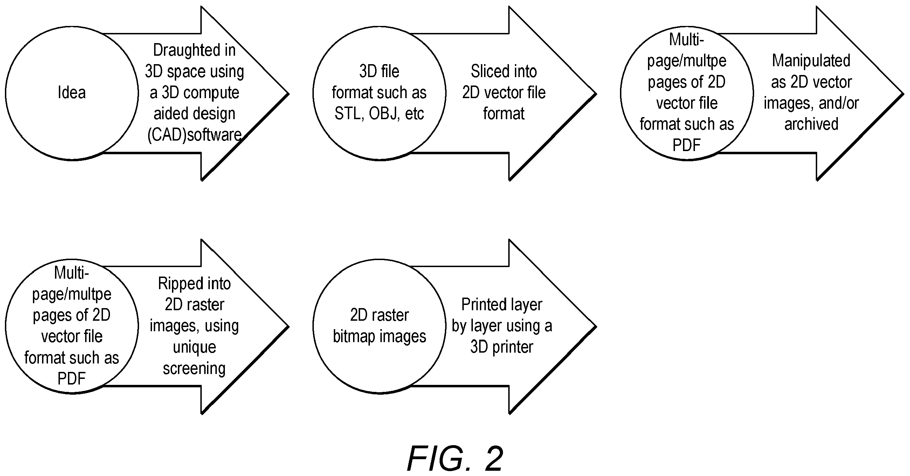

1. schematically illustrates the workflow of existing 3D inkjet printers. 2D vector images are manipulated to define shell and infill structures." This should be in done in step 2 of Figure 1, and step 3 of Figure 2.

2. schematically illustrates the workflow of the invention. Note that

 a. step 3 "manipulated as 2D vector images and/or archived" does not exist in Figure 1.
 b. Step 4 "...using unique screening" does not exist in Figure 1 and is where material qualities including in-fill microstructures are added to the image.

3. schematically illustrates some of the 3D material characteristics that can be encoded as greyscale colour in our invention.

4. schematically illustrates a screen tile created according to this invention. The dark lines are where fluid will be jetted to produce a structure element and the gaps are where none or little fluid will be jetted to save weight and materials.

5. schematically illustrates a 2D arrangement of screen tiles created according to this invention. The dark lines of each tile match up to join those of neighbouring tiles to produce contiguous elements.

6. schematically illustrates different tile arrangements in layers of tiles created according to this invention so that the detailed structure is contiguous with the detailed structure of adjacent layers above and below when overlaid. Adjacent layers can have different wall thicknesses, such that, whilst the walls are contiguous, i.e. joined to each other, the "white space" between the walls changes in size. In this way, the "white space" between the walls may form a tapered volume, such as a pyramidical 3d volume for the square tiles.

7. A continuous tone image

8. A half-tone image

9. Magnified section of a half-tone image showing detailed pixilation normally too small to notice.

10. Schematic interpretation of one preferred embodiment.

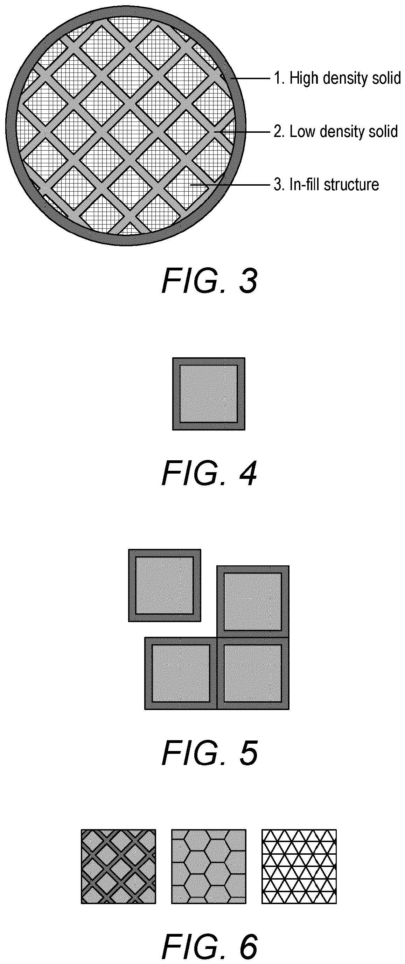

11. Examples of in-fill structures, along the form shown in Figure 3, 4 and 10 comprising a structure with a shell, solid sections defined by the 3D model and large in-fill sections defined only by repeated screen tiles.

12. Example of a 3D shape that can be produced as a homogenous solid using the present invention depending on the screen tile used.

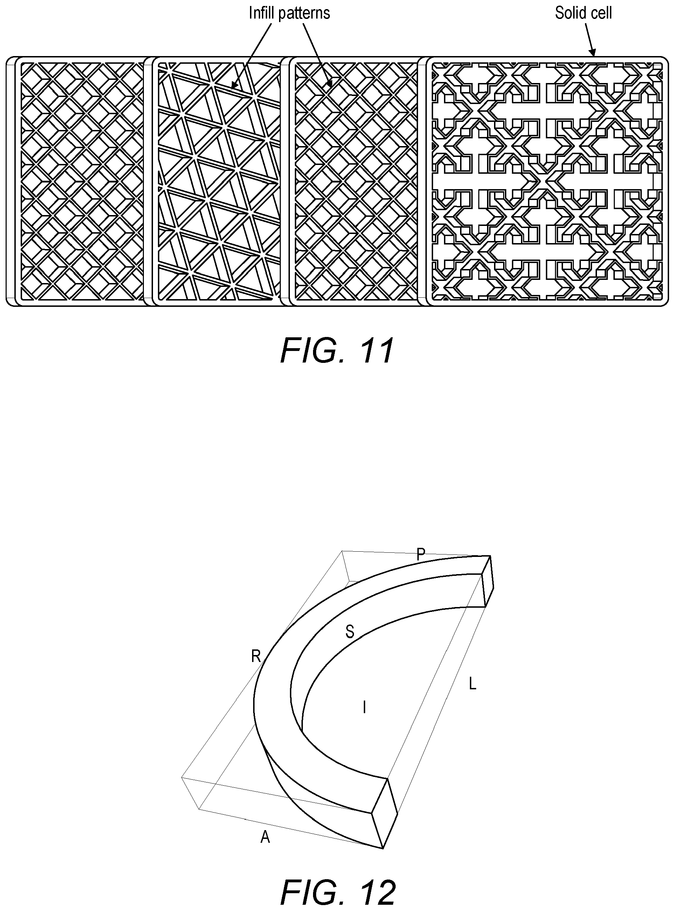

13. One 2D slice in vector format through the shape of Figure 12 showing a solid interior body (lighter internal colouring) formed with a stronger outer skin (darker outer line).

14. Example of a rasterized slice through the shape of Figure 12 showing a first infill pattern that could be deposited depending on the screen tile used.

15. Example of a further rasterized slice through the shape of Figure 12 showing a second, more open, infill pattern that could be deposited depending on the screen tile used.

16. Schematic of a 3D printer comprising a build box within which objects may be printed.

## DETAILED DESCRIPTION OF THE INVENTION

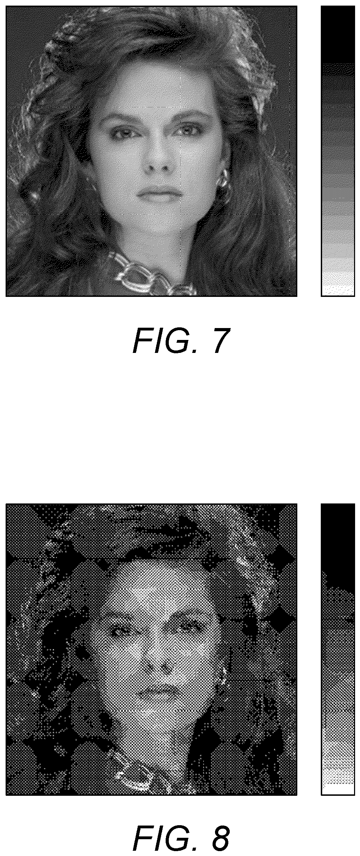

In 2D printing, continuous tone grey levels in a 2D file are used to control and represent visual density, or luminance, see Figure 7 as an example. Halftone screening is used with a binary palate of black and white to emulate varying shades of grey. The visual appearance of this effect is accomplished by varying the ratio of black to white dots within a specific area as shown in Figure 8.

In the invention, a 2D vector file is created by slicing through a 3D object file to create a series of images representative of different heights within the 3D object. Each image equates to a slice of the 3D object, with adjacent images being equivalent to adjacent layers in the object. Instead of using colour and/or grey levels to show visual density variableness as in their original intended purpose of that 2D file format, the colour and/or greyscale levels within those images are used to represent the desired specific non-colour characteristics of certain areas within the 3D object to be printed. These non-colour characteristics relate to the nature of the 3D inkjet printing process such as the mass density of binder fluid deposited to produce strength, or the pattern of microstructural elements within an area or volume to produce strength but little weight.

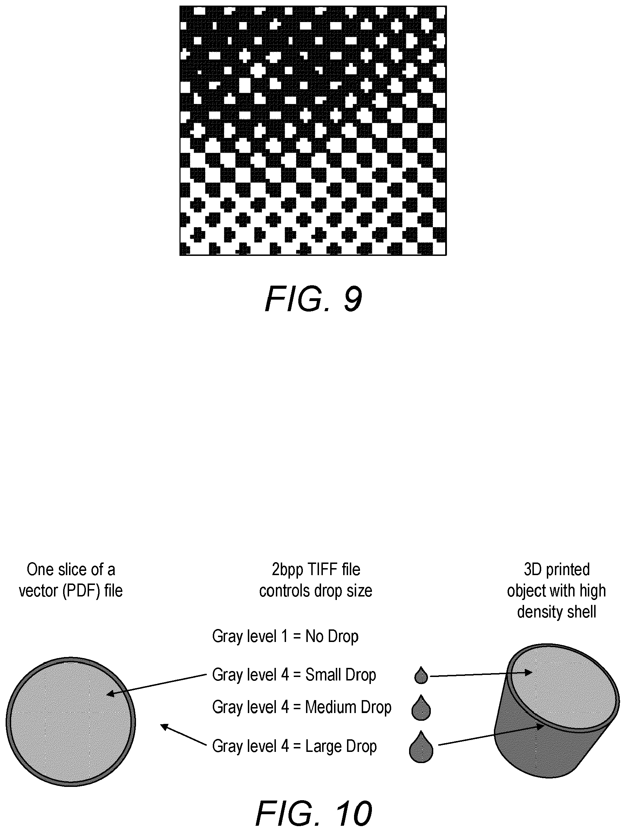

This is shown schematically in Figure 10 where 4 different drop sizes (including no drop) available from a selected printhead in 3D printing mode are encoded into 2bpp (bits per pixel) grey levels as if they were greyscale colours and used to interpret a desired 3d image file to produce a solid structure with a stronger skin. As shown, the left hand side of the Figure is an image from a 2-D vector file, which has different greyscale levels used in different regions of the image. Those greyscale levels are converted using the 2bpp levels in the middle part of the Figure such that the layer of the 3D object on the right hand side of the Figure that corresponds to the 2D image is printed with the correct detailing, such that the darker "edge" of the 2D image is 3D printed with a large drop so as to create the desired shell. The lighter greyscale is interpreted as a light drop, which can either be deposited as a less strong/lower density inner material.

The lighter greyscale level may be interpreted as shown in Figure 11 as one of a pattern of different infills. Each infill may have a different density of material, or may have a particular characteristic in a particular direction, i.e. a series of infill lines in particular direction would provide increased strength in that particular direction. Figure 11 shows how the outer portion of each part has been formed with a "solid" shell corresponding to a darker outer within a 2D image, with the centre part being less dense, i.e. by virtue of the infill pattern rather than solid material, and having been represented in the 2D images by a lighter greyscale.

The grey levels in vector slice files thus may be used to control and select infill patterns that produce microstructural elements in 3D objects. Each slice in vector format having a gray level to specify the area to be printed with an infill pattern. The exact pattern and location of these microstructures is defined by "screen tiles" that may not be specific to the actual 3D shape being printed. They may be determined by the greyscale within the 2D images and/or may be determined by other means, such as the infill pattern, i.e. triangular or cross hatching. These screen tiles produce structures, often called honeycomb structures even though that is but one example, that give strength but little weight. In some cases, they can be of temporary purpose, such as supporting the structure during printing, and quickly removed afterwards by mechanical or chemical means to reveal the intended 3D structure. In some cases, the microstructural elements are an intended structural component of the finished product, albeit that their exact positioning and pattern is not shown in the original 3D model; such model shows merely the 3D volumes in which such a structure is to be printed.

The honeycomb structure may be square or rectangular, offset alternating square or rectangle, triangular, hexagonal or diamond.

However, being able to draw such 3D volumes without having to draw each honeycomb element is a great time saving for the designer of the 3D shape. Likewise being able to quickly add supporting structures as undetailed volumes within the 3D model, without having to detail them in 3D, is a great time saving for the engineer whose task it is to make the 3D model suitable for the 3D printing process. Moreover, it can be foreseen that gravity can affect the choice of the temporary structure. The orientation of the 3D object within the 3D printer is often not known until a final stage of nesting products within the printer, so creating the temporary structure as part of the final RIPping of the nested image is advantageous in ensuring that the microstructure is always aligned to gravity irrespective of the orientation of each part.

An example of the use of 2D tiles is shown in Figures 3 to 6, in which Figure 3 illustrates a structure having inner and outer solid shell walls, between which a less dense material is located. This could be represented in 2D image files using for example black lines for the solid shells and a mid tone grey scale for the less dense material therebetween. The infill pattern inside the inner shell would however be complex to draw as a series of solid lines, but by using a different greyscale level, e.g. a light grey tone, this complex infill material can be rendered as a simple greyscale in the 2D images. The greyscale level of the infill material however is representative of a particular infill pattern made up of repeating tiles as shown in Figures 4 to 6. Thus, the 2D images can be manipulated as required and the only thing that changes is the shape of the light greyscale region. When it comes to actually RIP the 2D image into the printing commands, the area of the light grey tone is then translated into a series of identical tiles, such as shown in Figure 4, which can be used repeatedly, as shown in Figure 5, to fill the space defined by the light grey tone in the images. Then the desired infill pattern can be printed, so as to result in the desired infill shown in Figure 3. Figure 6 illustrates different arrangements of tiles that can tesselate, so as to create an infill pattern.

A further advantage of the use of 2D vector image files is that rasterization and pattern generation are no longer required in the slicing application. This makes the computational task of the slicer easier and faster. It is also more flexible since it is in vector format. Changes to infill pattern and small highly accurate re-sizing can be accomplished post slicing due to the use of vector format for the slices.

A screening engine in a standard 2D graphics RIP can be used to create the repetitive infill patterns. The screening engine may be a lattice pattern generating engine. Controls of pattern shape, wall thickness (for example, by controlling the ejected droplet size), cell size (that is, the size of the less dense material area between walls or boundaries of more dense material), and pattern size can be specified in the RIP. The screening pattern will maintain precisely the same point of origin for each successive Z axis slice to ensure X and Y axis alignment of the infill walls. The pattern point of origin will be in relation to the build box X and Y dimensions, not the object, so if multiple objects are to be temporarily joined during printing by a supporting structure then this too is easily achieved. The walls within a lattice pattern may be nonuniform, that it they may have a differing thickness at different depths of the wall. For example, a lower portion of a wall may be thicker than the top part of the wall. The change in thickness may be gradual, such as a sloped surface or may include one or more step changes.

Grayscale data in a vector file may produce internal structural patterns. Variation of the tonal values can be used to alter the characteristics of the structural pattern as mentioned above. For example, an increase in grayscale value may cause an increase in wall thickness of an internal geometric structure and/or a change in pattern. This allows for an overall decrease in fluid volume in a given area without sacrificing the strength of the object. An advantage of this method is the reduction in drying time of the fluid and, or, reduction in energy required to cure the fluid.

Whilst each slice of the 3d structure is a 2D vector file, it can be easily and accurately manipulated to make minute independent adjustment of X and Y scaling factors. This is necessary in some binderjet sintering processes in which the high heat used in the sintering process causes shrinkage of the printed object. Small adjustments to Z scaling can also be achieved by removing or duplicating pages (ie layers). Since the adjustments are made prior to rasterization, they can be accomplished with great accuracy and speed.

Additional manipulations such as rotation and orthogonality can also be made prior to rasterization to realize greater accuracy and speed for these types of adjustments to the final printed object.

A further disclosed innovation is the use of metadata in the 2D file format to store the height of the 3D object or the slice thickness that was used in creating the 2D file from the 3D file from which the height of the 3D structure can easily be calculated by the printer software by multiplying the number of pages by the slice thickness stored in the meta data. The printer software can then easily pack a print job by nesting individual jobs within the operating volume of the printer. X and Y dimension of each object can be obtained from the X and Y dimensions of the pages and the Z dimension of each object can be found, or calculated from the information placed in the metadata of the 2D file.

Example embodiments

In a first example embodiment, namely 3D binderjet printing, it is desirable to have a stronger, higher density shell around, but within, the object. This can be accomplished by ejecting larger inkjet droplets of binder fluid in the shell areas of the object. Figure 10 shows how this can be controlled as described above. A Raster Image Processor (RIP) is used to interpret the PDF file and convert it to a raster TIFF file which is necessary to drive the inkjet printheads. Grayscale printheads have the ability to eject variable sized droplets which is controlled by a multiple bit per pixel (bpp) format TIFF file, of which 2bpp and 4bpp are commonly used. When ejecting binder fluid into sand layers, larger droplets will create stronger bonds between these grains of sand.

In a second example embodiment, namely additive manufacturing (AM) methods of 3D printing, it is common and desirable to use infill patterns in the inner spaces of objects. This provides lighter weight and stronger objects as well as lower cost due to less material usage. This can be seen in Figure 11 which demonstrates a variety of different infill patterns. Each infill pattern may be associated with a specific colour or colour density in the 2D vector files.

In this invention STL or OBJ format CAD files are sliced to vector format and stored in Adobe PDF (RTM) file format. One preferred embodiment of this method uses a single PDF file containing multiple pages where each slice of the 3D object is represented by a corresponding individual page in the multi-page document. Although this was not the intended use for Acrobat (RTM) PDF files it provides many benefits which are significant to the 3D print systems which require rasterization for imaging.

- PDF is easily viewable with many open market tools for inspection of the job before printing.
- Since the files are in vector format, they are smaller in data size as compared to conventional raster slice files. Smaller file size makes them easier to archive or share via electronic networks.
- Vector PDF files can be edited or manipulated prior to rasterization. This provides capabilities such as scaling, infill pattern selection, geometric alterations, etc.
- PDF formats provide security encryption methods to protect IP content.
- PDF format is commonly used by many open-market Raster Image Processors (RIPs) which can be modified to adapt to the specific needs of 3D and AM inkjet printing.

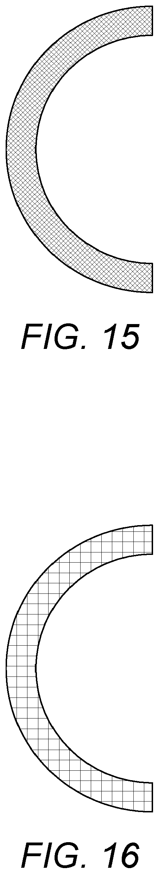

As shown schematically in Figure 16, each object of group of objects are shown here as having been nested in X and Y into a "slice pack" that fits the dimensions of the build box. The height of the slice pack is identified from the meta data of the 2D files and used to determine if another slice pack may be loaded above it. Here, two copies of one slice pack are shown and a second slice pack added above, all fitting within the internal volume of the build box. in one preferred embodiment of this invention, the items to be printed are nested by the printer software in a horizontal plane, according to their X and Y dimensions and then another layer is placed above on a virtual floor placed just above the highest Z height of the items in the lower layer until the predicted height of an item would be above the maximum achievable by the printer. This may be based on metadata stored in the 2D files in which at least the height (Z) of each "slice", i.e. the 2D vector file, is stored. Other data may also be stored such as X and Y dimensions. For automated loading and unloading of a 3D printer, it can be seen that such automatic nesting by software removes the need for an operator: multiple jobs of any number of copies may be queued for unmanned production without regard to their actual 3D shapes.

The principle of storing the height of each slice in the metadata of the respective 2D vector file has various uses including:

(1) Using a PDF file to describe the X-Y-Z volume dimensions of a 3D print job.
(2) Using modified PDF files which describe X-Y-Z volume dimensions to efficiently manage 3D printing.

Each multipage PDF file where each page describes a slice of a 3D object can be used to determine the precise volume of its printed space. This can be achieved by using the following formula:

$$(X \text{ page dimension}) * (Y \text{ page dimension}) * ((\text{sum of all pages} * \text{slice thickness}) = Z \text{ dimension})$$

The above formula will calculate the total volume in cubic inches or meters of each PDF 3D print file.
All of the variables in the above formula are known at the time the PDF 3D print file is produced.

- Page width = X dimension
- Page height = Y dimension
- Page count
- Slice thickness

When the slicing algorithm creates the PDF file additional data can be written into the metadata of the PDF file to provide the user, or software controlled by the user, the X-Y-Z value of the PDF 3D job.

- PDF job header contains X-Y dimensions of the PDF 3D print job.
- PDF metadata contains slice thickness for each layer (page).
- PDF metadata can also contain pre-calculated Z dimension of the PDF 3D print job (slice thickness * page count).

When each PDF file's X-Y-Z dimensions are known, a user can manually, or with the aid of a computer algorithm, programmatically select PDF 3D print jobs to make the most efficient usage of the 3D printer's build box volume.
For the purpose of the graphic examples shown each PDF 3D print job is referred to as a PDF "Slice Pack"

## Claims

**1.** A method of generating printhead actuation data for printing a 3-D object, the method comprising the steps of:

slicing, for a given 3-D object having 3-D object data corresponding thereto, the 3-D object data into a series of layers; and
generating a 2-D vector graphics image associated with each layer, wherein the colour and/or the density of colour within the 2-D vector graphics image at a given point is used to determine at least one property of the material to be ejected, during printing, at that given point in the image, further comprising the steps of saving the 2-D vector graphics images as a 2-D vector graphics file and analysing the metadata associated with a plurality of 2-D vector graphics files when determining how to nest or stack the objects to be printed within a print box.

**2.** A method according to claim 1, wherein the property of the material to be ejected includes one or more of: the volume of material to be ejected, the depth of material to be ejected, the pattern in which the material is to be ejected, the printing material itself, the mass density of a binder fluid within the material to be ejected.

**3.** A method according to claim 1 or claim 2, further comprising the step of obtaining the 3-D object data corresponding to the 3-D object.

**4.** A method according to any of the preceding claims, further comprising the step of storing, within metadata associated with the 2-D vector graphics file, information that relates to the layer thickness.

**5.** A method according to any of the preceding claims, further comprising the step of storing, within metadata associated with the 2-D vector graphics file, information that relates to the total height of the 3-D object.

**6.** A method according to any of the preceding claims, wherein the colour and/or the density of colour or greyscale determines the pattern of material to be ejected within a given region.

7. A method according to any of the preceding claims when dependent upon claim 2, wherein the pattern includes at least one repeated pattern, optionally wherein the repeated pattern is a 2-D tile pattern, optionally wherein multiple adjacent 2-D tile patterns produce a contiguous pattern.

8. A method according to claim 7, wherein the 2-D tile pattern has at least one pair of opposing edges which match to permit a contiguous pattern to be formed when adjacent tiles are aligned.

9. A method according to any of the previous claim, further comprising the step of manipulating one or more of the 2-D graphics images to alter the form of the final 3-D object to be printed, optionally wherein the manipulating step includes one or more of: rotation, scaling, changing the orthogonality of the image.

10. A system comprising a processor configured to carry out the method of any of claims 1 to 9.

11. A system according to claim 10, further comprising a screening engine, optionally configured to convert the 2-D graphics vector file into raster data for inkjet printing a layer of a 3D structure.

12. A system according to claim 11, wherein the screening engine is configured to, in dependence upon the colour, tone, shading or other property of different parts of the image, alter the printing instructions to vary the printing within the different parts of the image.

13. A system according to any of claims 11 or 12, wherein the screening engine is configured to allow further editing of the 2-D graphics vector file pages prior to RIPping so as to adjust for post-processing effects on the shape of the printed object.

**Patentansprüche**

1. Verfahren zum Erzeugen von Druckkopf-Betätigungsdaten zum Drucken eines 3D-Objekts, wobei das Verfahren die folgenden Schritte umfasst:

   Aufteilen der 3D-Objektdaten eines gegebenen 3D-Objekts, das entsprechende 3D-Objektdaten aufweist, in eine Reihe von Schichten; und
   Erzeugen eines jeder Schicht zugewiesenen 2D-Vektorgrafikbildes, wobei die Farbe und/oder die Farbdichte innerhalb des 2D-Vektorgrafikbildes an einem gegebenen Punkt zum Ermitteln zumindest einer Eigenschaft des während des Druckens an diesem gegebenen Punkt des Bildes auszugebenden Materials verwendet wird, ferner umfassend die Schritte des Speicherns der 2D-Vektorgrafikbilder als 2D-Vektorgrafikdatei und des Analysierens der einer Vielzahl von 2D-Vektorgrafikdateien zugewiesenen Metadaten, wenn ermittelt wird, wie die zu druckenden Objekte innerhalb einer Druckbox zu verschachteln oder zu stapeln sind.

2. Verfahren nach Anspruch 1, wobei die Eigenschaft des auszugebenden Materials eines oder mehrere umfasst von: dem Volumen des auszugebenden Materials, der Tiefe des auszugebenden Materials, dem Muster, in dem das Material auszugeben ist, dem Druckmaterial selbst, der Massendichte eines Bindemittels innerhalb des auszugebenden Materials.

3. Verfahren nach Anspruch 1 oder Anspruch 2, ferner umfassend den Schritt der Gewinnung der dem 3D-Objekt entsprechenden 3D-Objektdaten.

4. Verfahren nach einem der vorhergehenden Ansprüche, ferner umfassend den Schritt des Speicherns von Informationen, die sich auf die Schichtdicke beziehen, in den der 2D-Vektorgrafikdatei zugeordneten Metadaten.

5. Verfahren nach einem der vorhergehenden Ansprüche, ferner umfassend den Schritt des Speicherns von Informationen, die sich auf die Gesamthöhe des 3D-Objekts beziehen, in den der 2D-Vektorgrafikdatei zugeordneten Metadaten.

6. Verfahren nach einem der vorhergehenden Ansprüche, wobei die Farbe und/oder die Farb- oder Graustufendichte das Muster des in einem bestimmten Bereich auszugebenden Materials bestimmt.

7. Verfahren nach einem der vorhergehenden Ansprüche, bei Abhängigkeit von Anspruch 2, wobei das Muster zumindest ein sich wiederholendes Muster enthält, optional, wobei das sich wiederholende Muster ein 2D-Kachelmuster ist, optional, wobei mehrere benachbarte 2D-Kachelmuster ein zusammenhängendes Muster ergeben.

8. Verfahren nach Anspruch 7, wobei das 2D-Kachelmuster zumindest ein Paar gegenüberliegender Kanten aufweist, die übereinstimmen, um die Bildung eines zusammenhängenden Musters zu ermöglichen, wenn benachbarte Kacheln aufeinander ausgerichtet sind.

9. Verfahren nach einem der vorhergehenden Ansprüche, ferner umfassend den Schritt des Manipulierens eines oder mehrerer der 2D-Grafikbilder, um die Form des endgültigen zu druckenden 3D-Objekts zu verändern, wobei der Manipulationsschritt optional eines oder mehrere umfasst von: Rotation, Skalierung, Änderung der Orthogonalität des Bildes.

10. System, umfassend einen Prozessor, der zum Ausführen des Verfahrens nach einem der Ansprüche 1 bis 9 konfiguriert ist.

11. System nach Anspruch 10, ferner umfassend eine Rastermaschine, die optional zum Umwandeln der 2D-Grafikvektordatei in Rasterdaten zum Tintenstrahldrucken einer Schicht einer 3D-Struktur konfiguriert ist.

12. System nach Anspruch 11, wobei die Rastermaschine konfiguriert ist, in Abhängigkeit von der Farbe, dem Ton, der Schattierung oder einer anderen Eigenschaft verschiedener Teile des Bildes die Druckanweisungen zu ändern, um den Druck innerhalb der verschiedenen Teile des Bildes zu variieren.

13. System nach einem der Ansprüche 11 oder 12, wobei die Rastermaschine konfiguriert ist, eine weitere Bearbeitung der 2D-Grafik-Vektor-Dateiseiten vor dem RIPping zu ermöglichen, um Nachbearbeitungseffekte an die Form des gedruckten Objekts anzupassen.

**Revendications**

1. Procédé de génération de données d'actionnement de tête d'impression pour imprimer un objet 3-D, le procédé comprenant les étapes de :

le tranchage, pour un objet 3-D donné ayant des données d'objet 3-D correspondant à celui-ci, des données d'objet 3-D en une série de couches ; et

la génération d'une image graphique vectorielle 2-D associée à chaque couche, dans lequel la couleur et/ou la densité de couleur au sein de l'image graphique vectorielle 2-D en un point donné est utilisée pour déterminer au moins une propriété du matériau à éjecter, pendant l'impression, au niveau de ce point donné de l'image, comprenant en outre les étapes de sauvegarde des images graphiques vectorielles 2-D en tant que fichier graphique vectoriel 2-D et d'analyse des métadonnées associées à une pluralité de fichiers graphiques vectoriels 2-D lors de la détermination de la manière d'emboîter ou d'empiler les objets à imprimer dans une boîte d'impression.

2. Procédé selon la revendication 1, dans lequel la propriété du matériau à éjecter comprend un ou plusieurs parmi : le volume de matériau à éjecter, la profondeur de matériau à éjecter, le motif selon lequel le matériau doit être éjecté, le matériau d'impression lui-même, la masse volumique d'un fluide liant au sein du matériau à éjecter.

3. Procédé selon la revendication 1 ou la revendication 2, comprenant en outre l'étape d'obtention des données d'objet 3-D correspondant à l'objet 3-D.

4. Procédé selon l'une quelconque des revendications précédentes, comprenant en outre l'étape de stockage, au sein de métadonnées associées au fichier graphique vectoriel 2-D, d'informations qui se rapportent à l'épaisseur de couche.

5. Procédé selon l'une quelconque des revendications précédentes, comprenant en outre l'étape de stockage, au sein de métadonnées associées au fichier graphique vectoriel 2-D, d'informations qui se rapportent à la hauteur totale de l'objet 3-D.

6. Procédé selon l'une quelconque des revendications précédentes, dans lequel la couleur et/ou la densité de la couleur ou de l'échelle des gris détermine le motif de matériau à éjecter dans une région donnée.

7. Procédé selon l'une quelconque des revendications précédentes lorsqu'elles dépendent de la revendication 2, dans lequel le motif comprend au moins un motif répété, facultativement dans lequel le motif répété est un motif à pavés 2-D, facultativement dans lequel de multiples motifs à pavés 2-D adjacents produisent un motif contigu.

8. Procédé selon la revendication 7, dans lequel le motif à pavés 2-D a au moins une paire de bords opposés qui concordent pour permettre à un motif contigu d'être formé lorsque des pavés adjacents sont alignés.

9. Procédé selon l'une quelconque des revendications précédentes, comprenant en outre l'étape de manipulation d'une ou plusieurs des images graphiques 2-D pour modifier la forme de l'objet 3-D final à imprimer, facultativement dans lequel l'étape de manipulation comprend un ou plusieurs parmi : rotation, changement d'échelle, changement de l'orthogonalité de l'image.

10. Système comprenant un processeur configuré pour effectuer le procédé selon l'une quelconque des revendications 1 à 9.

11. Système selon la revendication 10, comprenant en outre un moteur de tramage, facultativement configuré pour convertir le fichier graphique vectoriel 2-D en données matricielles pour l'impression à jet d'encre d'une couche d'une structure 3D.

12. Système selon la revendication 11, dans lequel le moteur de tramage est configuré pour, en fonction de la couleur, du ton, de l'ombrage ou d'une autre propriété de différentes parties de l'image, modifier les instructions d'impression pour faire varier l'impression au sein des différentes parties de l'image.

13. Système selon l'une quelconque des revendications 11 ou 12, dans lequel le moteur de tramage est configuré pour permettre une édition supplémentaire des pages de fichier graphique vectoriel 2-D avant le traitement d'images matricielles de manière à ajuster les effets de post-traitement sur la forme de l'objet imprimé.

FIG. 1

*FIG. 2*

1. High density solid

2. Low density solid

3. In-fill structure

*FIG. 3*

*FIG. 4*

*FIG. 5*

*FIG. 6*

FIG. 7

FIG. 8

FIG. 9

One slice of a
vector (PDF) file

2bpp TIFF file
controls drop size

3D printed
object with high
density shell

Gray level 1 = No Drop

Gray level 4 = Small Drop

Gray level 4 = Medium Drop

Gray level 4 = Large Drop

FIG. 10

Infill patterns                                    Solid cell

FIG. 11

FIG. 12

16

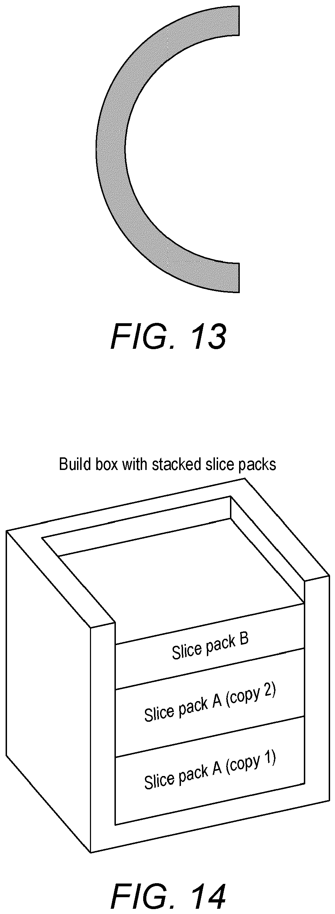

FIG. 13

Build box with stacked slice packs

Slice pack B

Slice pack A (copy 2)

Slice pack A (copy 1)

FIG. 14

FIG. 15

FIG. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017210254 A

- WO 2015106840 A